# EUROPEAN PATENT APPLICATION

(11) **EP 4 711 930 A1**
(43) Date of publication of application: **18.03.2026**
(21) Application number: 24220010.3
(22) Date of filing: 13.12.2024
(51) Int. Cl.: G06F 11/14

(54) **MODEL TRAINING AND CHECKPOINT FILE STORAGE SYSTEMS AND METHODS**

(30) Priority: 12.09.2024 CN 202411281873
(71) Applicant: Alipay (Hangzhou) Information Technology Co., Ltd., Hangzhou, Zhejiang 310000 (CN)
(72) Inventor: LIU, Jian, Hangzhou, Zhejiang, 310000 (CN); GU, Shuwei, Hangzhou, Zhejiang, 310000 (CN); ZHAN, Xiaojun, Hangzhou, Zhejiang, 310000 (CN); RUAN, Ruoyi, Hangzhou, Zhejiang, 310000 (CN)
(74) Representative: Fish & Richardson P.C.

(57) **Abstract**

One or more embodiments of this specification provide a model training and checkpoint file storage system and method. The system includes a model training module and a checkpoint file processing module. The model training module is configured to execute a training task of an artificial intelligence model, where computation in the training task is performed by GPU chips; and during the execution of the training task, if a first checkpoint file is generated, the training task is suspended, and a request is made to the checkpoint file processing module to write the first checkpoint file. The checkpoint file processing module is configured to locally cache the first checkpoint file based on a received write request for the first checkpoint file, and then concurrently perform a notification operation and a storage operation, where the notification operation is used to return a write success notification for the first checkpoint file to the model training module, to indicate the model training module to resume the training task, and the storage operation is used to persist the first checkpoint file.

## Description

### TECHNICAL FIELD

One or more embodiments of this specification relate to the field of artificial intelligence and data storage technologies, and in particular, to model training and checkpoint file storage systems and methods.

### BACKGROUND

Artificial intelligence (AI) models are gradually becoming a crucial force for promoting scientific and technological progress. AI models, particularly deep learning models, can automatically extract features from a large amount of data by mimicking the structure and functions of human brain neural networks, to learn and predict complex patterns. From speech recognition to image analysis and then to natural language processing, the AI models are widely applied, greatly improves an automation level and efficiency, and becomes a core driving force of innovation in various industries.

In a training process of an AI model, a checkpoint mechanism is widely used to address possible unexpected interruptions such as system failures or power problems, and to facilitate management and recovery of the training process. A checkpoint refers to saving a current state, including but not limited to model weights, an optimizer state, a count of training iterations, among other crucial information, of the model at a specific time point during training. This mechanism allows the model to restart from the checkpoint, eliminating the need to start training from scratch, thus saving time and computational resources and ensuring continuity and stability in the training process.

In related technologies, after a checkpoint file is generated, the training process of the AI model is suspended until the checkpoint file is completely written into a remote storage system, resulting in a reduction in overall training efficiency and a waste of computational resources.

### SUMMARY

In view of this, one or more embodiments of this specification provide the following technical solutions.
According to a first aspect of one or more embodiments of this specification, a model training and checkpoint file storage system is provided and includes a model training module and a checkpoint file processing module.
The model training module is configured to execute a training task of an artificial intelligence model, where computation in the training task is performed by GPU chips; during the execution of the training task, if a first checkpoint file is generated, the training task is suspended, and a request is made to the checkpoint file processing module to write the first checkpoint file.
The checkpoint file processing module is configured to locally cache the first checkpoint file based on a received write request for the first checkpoint file, and then concurrently perform a notification operation and a storage operation. The notification operation is used to return a write success notification for the first checkpoint file to the model training module, to indicate the model training module to resume the training task, and the storage operation is used to persist the first checkpoint file.

According to a second aspect of one or more embodiments of this specification, a model training and checkpoint file storage method is provided and applied to a model training module in a system. The system further includes a checkpoint file processing module. The method includes: executing a training task of an artificial intelligence model, where computation in the training task is performed by GPU chips; during the execution of the training task, if a first checkpoint file is generated, suspending the training task, and making a request to the checkpoint file processing module to write the first checkpoint file; and resuming the training task when receiving a write success notification returned by the checkpoint file processing module for the first checkpoint file, where the checkpoint file processing module locally caches the first checkpoint file based on a received write request for the first checkpoint file, and then concurrently performs a notification operation and a storage operation, where the notification operation is used to return the write success notification for the first checkpoint file to the model training module, and the storage operation is used to persist the first checkpoint file.

According to a third aspect of one or more embodiments of this specification, a model training and checkpoint file storage method is provided and applied to a checkpoint file processing module in a system. The system further includes a model training module. The method includes: receiving a write request of the model training module for a first checkpoint file, where the first checkpoint file is generated when the model training module executes a training task of an artificial intelligence model, computation in the training task is performed by GPU chips, and the training task is suspended after the first checkpoint file is generated; locally caching the first checkpoint file; and concurrently performing a notification operation and a storage operation, where the notification operation is used to return a write success notification for the first checkpoint file to the model training module, to indicate the model training module to resume the training task, and the storage operation is used to persist the first checkpoint file.

According to a fourth aspect of one or more embodiments of this specification, an electronic device is provided and includes: a processor; and a storage, configured to store instructions executable by the processor. The processor runs the executable instructions to implement the steps of the method according to the second aspect or the third aspect.

According to a fifth aspect of one or more embodiments of this specification, a computer-readable storage medium is provided. The computer-readable storage medium stores computer instructions, and when the instructions are executed by a processor, the steps of the method according to the second aspect or the third aspect are implemented.

According to a sixth aspect of one or more embodiments of this specification, a computer program product is provided and includes a computer program/instructions. When the computer program/instructions is/are executed by a processor, the steps of the method according to the second aspect or the third aspect are implemented.

From the above-mentioned embodiments, it can be seen that this specification configures the model training module and the checkpoint file processing module in such a way that during the execution of the training task of the AI model, the model training module can hand over the generated checkpoint file to the checkpoint file processing module for local caching. This allows the training task of the AI model to be resumed without waiting for the checkpoint file processing module to complete the actual persistence of the checkpoint file. This is achieved by concurrently performing the notification operation and the storage operation, as described earlier. By processing the notification operation independently of the storage operation, as opposed to processing the storage and notification operations sequentially, the downtime of the training task of the AI model during suspension can be greatly reduced. As a result, this approach significantly enhances the overall training efficiency of the AI model and reduces the waste of computational resources during suspensions.

### BRIEF DESCRIPTION OF DRAWINGS

FIG. 1 is a schematic architectural diagram illustrating an overall hardware system, according to some example embodiments;
FIG. 2 is a schematic flowchart illustrating concurrently performing a notification operation and a storage operation, according to some example embodiments;
FIG. 3 is another schematic flowchart illustrating concurrently performing a notification operation and a storage operation, according to some example embodiments;
FIG. 4 is a flowchart illustrating a model training and checkpoint file storage method, according to some example embodiments;
FIG. 5 is a flowchart illustrating another model training and checkpoint file storage method, according to some example embodiments;
FIG. 6 is a schematic structural diagram illustrating a device, according to some example embodiments;
FIG. 7 is a block diagram illustrating a model training and checkpoint file storage apparatus, according to some example embodiments; and
FIG. 8 is a block diagram illustrating another model training and checkpoint file storage apparatus, according to some example embodiments.

### DESCRIPTION OF EMBODIMENTS

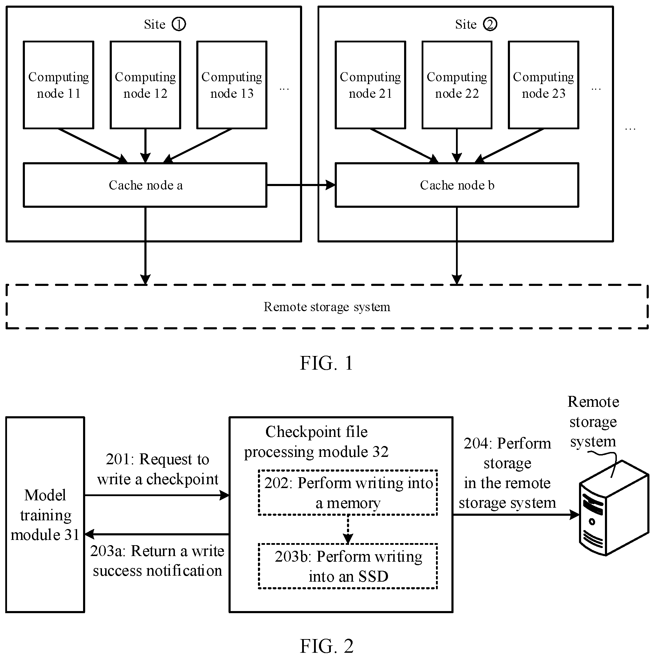

FIG. 1 is a schematic architectural diagram illustrating an overall hardware system, according to some example embodiments. The system can include a computing node and a first cache node that are deployed in a first site.

A site can generally refer to any IT facilities located at specific geographical locations, including but not limited to a server room, a data center, or another form. In this specification, each site can be an independent data center, a server room, or even all IT facilities in a specific geographical area. Implementations are not limited in this specification. The first site can be any site, for example, a site ① or a site ② shown in FIG. 1, or another site not shown.

If any site is the first site, a computing node and a cache node can be deployed in the first site. There can be one or more computing nodes in the first site. Similarly, there can be one or more cache nodes in the first site. The site ① shown in FIG. 1 is used as an example. The site ① includes a computing node 11, a computing node 12, a computing node 13, etc., and a cache node a. The site ② shown in FIG. 1 is used as another example. The site ② includes a computing node 21, a computing node 22, a computing node 23, etc., and a cache node b. Certainly, in an actual running process, interaction logic between computing nodes and cache nodes is consistent. Therefore, any group of computing nodes and cache nodes can be used as a logical whole, to help understand the technical solutions of this specification in detail. For example, in the first site, any computing node can be selected, and a corresponding cooperating cache node is referred to as a first cache node, to make a distinction from a cache node in another site.

The computing node is configured to execute a training task of an artificial intelligence model. Specifically, a computing unit is disposed on the computing node, and can be configured to execute the training task of the AI model. For example, in view of advantages of a graphics processing unit (GPU) chip in parallel computing, high memory bandwidth, a large-capacity graphics memory, targeted optimization by a corresponding manufacturer, etc., the computing unit can be constructed based on GPU chips. Certainly, another chip that has a related processing capability can also be used to construct the computing unit, for example, a tensor processing unit (TPU), a field-programmable gate array (FPGA), or a central processing unit (CPU). Implementations are not limited in this specification.

The computing node 11 is used as an example. During the execution of the training task of the AI model, the computing node 11 needs to obtain a dataset needed for training, and further needs to store a checkpoint file generated in a training process. In most cases, each site is usually not dedicated to model training of a certain service, and each site needs to be reused on a time-division basis for services based on an actual situation. Therefore, it is impossible to locally store the dataset or the checkpoint file at a certain site for a long time, but the dataset or the checkpoint file is usually stored in a remote storage system serving as a data foundation or a data base. Therefore, the computing node 11 reads the dataset from the remote storage system for the training task, and stores the checkpoint file generated in the training process into the remote storage system. An architecture or a form used by the remote storage system, for example, a data warehouse, a data lake, or a data lakehouse, is not limited in this specification, and does not affect implementation of the technical solutions of this specification.

If the computing node 11 directly obtains the dataset from the remote storage system, and directly writes the checkpoint file into the remote storage system, a data IO link of the computing node 11 is very long, possibly resulting in a relatively significant delay. For example, the computing node 11 may not be able to obtain, in a timely way, the dataset needed for training, resulting in training blockage. For another example, before it is determined that the checkpoint file is successfully persisted to the remote storage system, the training task on the computing node 11 remains suspended. If the checkpoint file cannot be written in a timely way, this could lead to a long interruption of the training process.

Therefore, addition of the above-mentioned first cache node to the first site is provided in this specification. The site ① is used as an example. The cache node a can be disposed in the site ①, and the cache node a can cooperate with the computing node 11, to resolve the above-mentioned problem.

For example, the cache node a can obtain the dataset required for training by the computing node 11 from the remote storage system in advance, so that the computing node 11 can obtain the dataset from the cache node a in the training process. Compared with that the computing node 11 directly reads the dataset from the remote storage system, the data IO link of the computing node 11 is greatly shortened, to avoid blocking the training process of the AI model.

For another example, during the execution of the training task, if the checkpoint file is generated, the computing node 11 suspends the training task, and makes a request to the cache node a to write the checkpoint file. Correspondingly, the cache node a can locally cache the checkpoint file based on the request of the computing node 11, and then concurrently perform a notification operation and a storage operation. The notification operation is used to return a write success notification for the checkpoint file to the computing node 11, to indicate the computing node 11 to resume the training task, and the storage operation is used to further store the checkpoint file in the remote storage system for persistence. The concurrent processing herein can be understood as follows: The notification operation and the storage operation are independent of each other. Execution of the notification operation can be started at any time regardless of whether execution of the storage operation is started or whether execution of the storage operation ends, and there is no definite sequence between the two operations. It can be seen that the notification operation and the storage operation are concurrently performed, so that after the checkpoint file is locally cached by the cache node a, the computing node 11 can be enabled to resume the training task without waiting for the checkpoint file to be persisted to the remote storage system. Therefore, suspension duration of the training task on the computing node 11 is greatly shortened.

A person skilled in the art can understand that in the above-mentioned embodiments, descriptions are provided around a computing node and a cache node, and a concept of the computing node or the cache node actually belongs to a combination of functional logic at a software level and a processing resource at a hardware level. The processing resource involved can include computational resources (for example, GPU resources or CPU resources), storage resources (for example, memory resources or disk resources), network resources, etc. Resources are not listed one by one here. In the technical solutions of this specification, functional logic of the computing node and the cache node at the software level can be extracted, the functional logic of the computing node is abstracted as a model training module, and the functional logic of the cache node is abstracted as a checkpoint file processing module. Correspondingly, this specification further provides the following model training and checkpoint file storage system. The system includes a model training module and a checkpoint file processing module.
The model training module is configured to execute a training task of an artificial intelligence model, where computation in the training task is performed by GPU chips; and during the execution of the training task, if a first checkpoint file is generated, the training task is suspended, and a request is made to the checkpoint file processing module to write the first checkpoint file. The checkpoint file processing module is configured to locally cache the first checkpoint file based on a received write request for the first checkpoint file, and then concurrently perform a notification operation and a storage operation. The notification operation is used to return a write success notification for the first checkpoint file to the model training module, to indicate the model training module to resume the training task, and the storage operation is used to persist the first checkpoint file.

Therefore, with reference to the above-mentioned descriptions, it can be seen that during the execution of the training task of the AI model, the model training module can hand over the generated checkpoint file to the checkpoint file processing module for local caching. This allows the training task of the AI model to be resumed without waiting for the checkpoint file processing module to complete the actual persistence of the checkpoint file. This is achieved by concurrently performing the notification operation and the storage operation, as described earlier. By processing the notification operation independently of the storage operation, as opposed to processing the storage and notification operations sequentially, the downtime of the training task of the AI model during suspension can be greatly reduced. As a result, this approach significantly enhances the overall training efficiency of the AI model and reduces the waste of computational resources during suspensions.

A local memory and a local nonvolatile memory can be disposed on a first cache node. For example, the local nonvolatile memory can be a solid-state drive (SSD). Certainly, implementations are not limited in this specification. Actually, even if the local nonvolatile memory on the first cache node is a hard disk drive (HDD) with a lower read/write speed, because an IO link between a computing node and the first cache node is far shorter than an IO link between the computing node and a remote storage system, the first cache node can still shorten a time consumed by the computing node to read a dataset or write a checkpoint file. If an SSD or another high-speed memory is used, the first cache node can be referred to as an all-flash cache node. Further, if all cache nodes in all sites in the system are all-flash cache nodes, these all-flash cache nodes can form a logical all-flash cache layer between each computing node and the remote storage system, to optimize data IO between each computing node and the remote storage system.

In an embodiment, that the checkpoint file processing module locally caches the first checkpoint file can be understood as writing the first checkpoint file into a local memory. Specifically, if the checkpoint file processing module is disposed on the first cache node, this can be understood as that the first checkpoint file is written into the local memory on the first cache node. For example, as shown in FIG. 2, in step 201, the model training module 31 can make a request to the checkpoint file processing module 32 to write the checkpoint file. In step 202, the checkpoint file processing module 32 can write the checkpoint file from the model training module 31 into the local memory. In step 203a, when determining that the checkpoint file is written into the local memory, the checkpoint file processing module 32 returns a write success notification to the model training module 31, so that the model training module 31 resumes the originally suspended training task of the AI model based on the write success notification. Concurrent with step 203a, the checkpoint file processing module 32 can write the checkpoint file into a local SSD from the local memory in step 203b, and further store the checkpoint file in the remote storage system from the local SSD in step 204.

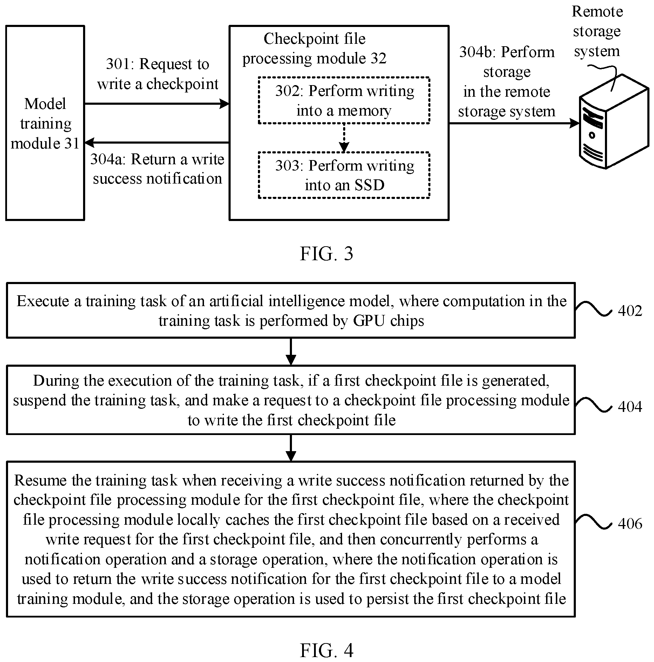

In another embodiment, that the checkpoint file processing module locally caches the first checkpoint file can be understood as writing the first checkpoint file into a local nonvolatile memory. It is worthwhile to note here that in this specification, the checkpoint file processing module locally caches the first checkpoint file, which is temporary storage compared with subsequent persistence. Therefore, this local caching operation can not only include the above-mentioned writing into the memory, but also include the writing into the nonvolatile memory here. This also aligns with the above-mentioned function of the cache node in the overall hardware system. The cache node is intended to implement a caching function between the computing node and the remote storage system or between computing nodes. That is, the "caching" locally performed by the checkpoint file processing module on the first checkpoint file is a temporary storage function logically implemented, and may have a specific difference from a buffer or cache technology in related technologies. Correspondingly, for example, as shown in FIG. 3, in step 301, the model training module 31 can make a request to the checkpoint file processing module 32 to write the checkpoint file. In step 302, the checkpoint file processing module 32 can write the checkpoint file from the model training module 31 into a local memory. In step 303, the checkpoint file processing module 32 can write the checkpoint file from the local memory to a local SSD. In step 304a, when determining that the checkpoint file is written into the local SSD, the checkpoint file processing module 32 returns a write success notification to the model training module 31, so that the model training module 31 resumes the originally suspended training task of the AI model based on the write success notification. Concurrent with step 304a, the checkpoint file processing module 32 can further store the checkpoint file in the remote storage system from the local SSD in step 304b.

Certainly, specifically, whether the write success notification is returned to the model training module when the first checkpoint file is written into the local memory or the local nonvolatile memory can be selected based on an actual situation. For example, when a success rate of writing into the nonvolatile memory from the memory is relatively high, a write success can be determined and the write success notification can be returned provided that writing into the local memory is implemented. However, if a success rate of writing into the nonvolatile memory from the memory is relatively low, a write success can be determined and the write success notification can be returned only when writing into the local nonvolatile memory is implemented. Alternatively, an occasion of returning the write success notification can be determined based on other logic.

### Implementations are not limited in this specification.

It is worthwhile to note that some storage devices based on a 3D magnetic memory (3D XPoint) or a similar technology can be used as memories in a conventional sense, and can be further used as nonvolatile memories in a conventional sense, that is, a boundary between the memory and the nonvolatile memory may be blurred in such storage devices. Correspondingly, if a storage device of the above-mentioned type is used, the checkpoint file processing module can return the write success notification to the model training module after writing the first checkpoint file into the storage device.

When the storage operation is performed, there may be different cases for persistence of the first checkpoint file by the checkpoint file processing module. In an embodiment, based on the above-mentioned embodiment, if the locally caching the first checkpoint file is writing into the local memory, it can be considered that, that the checkpoint file processing module persists the first checkpoint file includes writing the first checkpoint file into the local nonvolatile memory for persistence. Certainly, in this case, the checkpoint file processing module may be no longer disposed on the above-mentioned cache node but on another storage node configured to implement a storage function. In this case, a corresponding overall hardware architecture may be different from the embodiment shown in FIG. 1. For example, in this case, the overall hardware architecture can include a computing node and a storage node. The model training module is located on the computing node, the checkpoint file processing module is located on the storage node, and the remote storage system is not necessarily needed.

In another embodiment, regardless of whether the locally caching the first checkpoint file is writing into the local memory or writing into the local nonvolatile memory, that the checkpoint file processing module persists the first checkpoint file can include storing the first checkpoint file in the remote storage system. The checkpoint file processing module can store the first checkpoint file in the remote storage system by using any form of IO link. Implementations are not limited in this specification. Actually, because the write success notification is returned to the model training module, the model training module can resume the training task of the AI model. Therefore, a time consumed for storing the first checkpoint file in the remote storage system may not be considered too much because in this case, training of the AI model is not blocked.

In an embodiment, the checkpoint file processing module can directly send the first checkpoint file to the remote storage system for storage. Transfer logic in this solution is relatively simple. The cache node a shown in FIG. 1 is still used as an example. Assume that the checkpoint file processing module is located on the cache node a, and an IO link can be directly established between the cache node a and the remote storage system. In this case, the checkpoint file processing module can write the checkpoint file, for example, from the model training module (for example, located on the computing node 11), into the remote storage system based on the IO link. Certainly, a person skilled in the art knows that the IO link directly established between the cache node a and the remote storage system should be understood as a logical link. That is, logically, one end of the IO link is the cache node a and the other end is the remote storage system. However, physically, forwarding through several network devices usually needs to be performed.

In another embodiment, the checkpoint file processing module can send the first checkpoint file to the remote storage system for storage through forwarding by at least one other checkpoint file processing module. The cache node a shown in FIG. 1 is still used as an example. Assume that the checkpoint file processing module is located on the cache node a. The cache node a can first send the checkpoint file, for example, from the model training module (for example, located on the computing node 11), to the cache node b in the site 20, and then another checkpoint file processing module on the cache node b forwards the checkpoint file to the remote storage system, that is, forwarding is performed for one time for implementation. Alternatively, another checkpoint file processing module on the cache node b can further forward the checkpoint file to, for example, a checkpoint file processing module on a cache node in another site not shown in FIG. 1, so that the checkpoint file processing module forwards the checkpoint file to the remote storage system, that is, forwarding is performed for two times for implementation. Alternatively, forwarding can be performed for more times for implementation. Implementations are not listed one by one here.

The above-mentioned forwarding scheme can achieve a load sharing function. For example, in addition to transferring the first checkpoint file, the first cache node on which the checkpoint file processing module is located may further need to read, for example, the dataset needed for training from the remote storage system. Therefore, by transferring the first checkpoint file to a checkpoint file processing module on another cache node for forwarding, overloading of an IO link between the first cache node and the remote storage system can be avoided. In addition, the forwarding scheme may further improve efficiency of transferring the first checkpoint file. For example, the IO link between the first cache node and the remote storage system may use a common line service, and an IO link between another cache node and the remote storage system may use a dedicated line service. The dedicated line service has a dedicated bandwidth channel, a lower transfer delay, and higher reliability and security. Therefore, even if forwarding is performed for one or more times, it can still be ensured that the efficiency of transferring the first checkpoint file is higher and a shorter time is consumed for transfer.

Certainly, before formally transferring the first checkpoint file, the checkpoint file processing module can further determine an estimated time for directly sending the first checkpoint file and an estimated time for sending the first checkpoint file through forwarding; and then select a sending method with a shorter estimated time to send the first checkpoint file to the remote storage system. In this case, the checkpoint file processing module even does not need to pay attention to whether the IO link between the first cache node on which the checkpoint file processing module is located or another cache node and the remote storage system uses the dedicated line service or the common line service, and only needs to make a selection based on the estimated time that is actually computed. The estimated time can be computed in any manner in the related technologies. Details are omitted here for simplicity.

The checkpoint file processing module can further back up the first checkpoint file to another checkpoint file processing module. The checkpoint file processing module and the another checkpoint file processing module are respectively located in different cache units. For example, the checkpoint file processing module is located in a first cache unit and the another checkpoint file processing module is located in a second cache unit. The first cache unit and the second cache unit respectively use different storage resources, so that backup of the first checkpoint file can make the cached first checkpoint file highly available. The first cache unit and the second cache unit can be located in the same site. Alternatively, the first cache unit and the second cache unit can be respectively located in different sites. For example, the first cache unit is located in a first site and the second cache unit is located in a second site. The second site is another site different from the first site. There can be one or more other checkpoint file processing modules. This depends on a backup scheme for the first checkpoint file. Implementations are not limited in this specification. FIG. 1 is used as an example. After obtaining the checkpoint file from the model training module on the computing node 11, the checkpoint file processing module on the cache node a can back up the checkpoint file to the checkpoint file processing module on the cache node b in the site 20. With reference to the above-mentioned forwarding scheme, it is easy to find that there can be a specific association between the forwarding scheme and the backup solution here. That is, the same checkpoint file processing module can be configured to forward the first checkpoint file, and can simultaneously retain the first checkpoint file received by the same checkpoint file processing module, to implement backup. As such, the checkpoint file processing module needs to perform only one time of transfer to the outside, to simultaneously forward and back up the first checkpoint file. Certainly, checkpoint file processing modules used for forwarding and backup can alternatively and respectively be different checkpoint file processing modules. For example, the checkpoint file processing module on the first cache node can send the first checkpoint file to a checkpoint file processing module on a second cache node for backup, and send the first checkpoint file to a checkpoint file processing module on a third cache node for forwarding. Implementations are not limited in this specification.

During the execution of the training task of the AI model, the model training module continuously generates checkpoint files based on a predefined scheme. Therefore, the checkpoint file processing module also needs to correspondingly and repeatedly perform a write operation on the checkpoint file by using the above-mentioned technical solution. To make a distinction from the first checkpoint file, assume that the model training module subsequently generates another second checkpoint file. In this case, the checkpoint file processing module is further configured to: when receiving a write request of the model training module for the second checkpoint file, determine whether a storage operation on another previously obtained checkpoint file is successfully performed. If the checkpoint file processing module determines that the storage operation on the first checkpoint file fails to be performed, that is, the first checkpoint file fails to be persisted, the checkpoint file processing module can retry the storage operation on the first checkpoint file until the execution succeeds. Correspondingly, after determining that the storage operation on the first checkpoint file is successfully performed, the model training module can roll back the training task based on the first checkpoint file, to discard a training result and a generated checkpoint file after the first checkpoint file. Because the storage operation on the first checkpoint file is concurrently performed, considering a time consumed in a transfer process, there may be other checkpoint files between the first checkpoint file and the second checkpoint file, and these checkpoint files and the second checkpoint file are all checkpoint files that need to be discarded. Certainly, even if there is a minor waste of computational resources used by the model training module in this case, because the probability of failure in writing the checkpoint file is very low. Therefore, compared to the overall improvement in AI model training efficiency achieved by the technical solution in this specification, the benefits are far greater than the drawbacks.

Actually, it is verified that in the technical solutions of this specification, in a training process of an AI model with trillions of parameters, write duration of a checkpoint file can be controlled to be at a 10-second level or even within 10 seconds. Clearly, compared with write duration at a minute level in the related technologies, this achieves a significant improvement in efficiency. In particular, when the computing node executes a training task of the AI model, the checkpoint file is frequently generated, and corresponding write duration needs to be occupied each time. Therefore, although the write duration is shortened to be at a level of only tens of seconds each time, for the execution process of the entire training task, because the checkpoint files are continuously generated, considerable duration is saved, and training efficiency of the AI model and resource utilization of the computing node are even greatly improved.

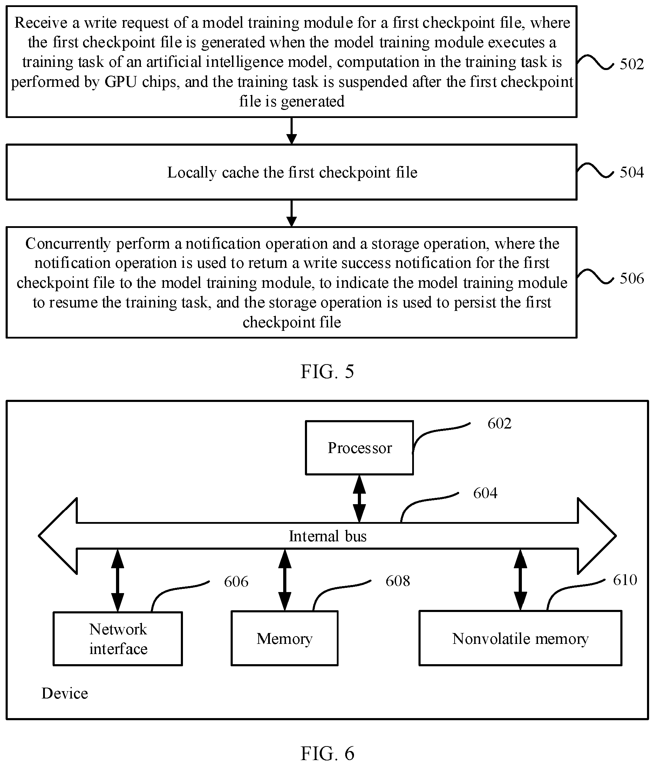

Corresponding to the above-mentioned model training and checkpoint file storage system, this specification further separately describes the technical solutions of this specification from a perspective of the model training module and a perspective of the checkpoint file processing module with reference to FIG. 4 and FIG. 5 in the following.

FIG. 4 is a flowchart illustrating a model training and checkpoint file storage method, according to some example embodiments. As shown in FIG. 4, the method is applied to a model training module in a system. The system further includes a checkpoint file processing module. The method includes the following steps.
Step 402: Execute a training task of an artificial intelligence model, where computation in the training task is performed by GPU chips.

Step 404: During the execution of the training task, if a first checkpoint file is generated, suspend the training task, and make a request to the checkpoint file processing module to write the first checkpoint file.

Step 406: Resume the training task when receiving a write success notification returned by the checkpoint file processing module for the first checkpoint file, where the checkpoint file processing module locally caches the first checkpoint file based on a received write request for the first checkpoint file, and then concurrently performs a notification operation and a storage operation, where the notification operation is used to return the write success notification for the first checkpoint file to the model training module, and the storage operation is used to persist the first checkpoint file.

Optionally, the method further includes: after a request is made to the checkpoint file processing module to write a second checkpoint file, if it is determined that the checkpoint file processing module fails to perform the storage operation on the first checkpoint file and the retried storage operation on the first checkpoint file is successfully performed, rolling back the training task based on the first checkpoint file.

As described above, the embodiment shown in FIG. 4 is used to describe the technical solutions of this specification from the perspective of the model training module. However, related content is actually described above in detail with reference to the embodiments shown in FIG. 1 to FIG. 3. Therefore, for understanding, references can be made to the above-mentioned descriptions. Details are omitted here for simplicity.

FIG. 5 is a flowchart illustrating another model training and checkpoint file storage method, according to some example embodiments. As shown in FIG. 5, the method is applied to a checkpoint file processing module in a system. The system further includes a model training module. The method includes the following steps.
Step 502: Receive a write request of the model training module for a first checkpoint file, where the first checkpoint file is generated when the model training module executes a training task of an artificial intelligence model, computation in the training task is performed by GPU chips, and the training task is suspended after the first checkpoint file is generated.

Step 504: Locally cache the first checkpoint file.

Step 506: Concurrently perform a notification operation and a storage operation, where the notification operation is used to return a write success notification for the first checkpoint file to the model training module, to indicate the model training module to resume the training task, and the storage operation is used to persist the first checkpoint file.

Optionally, the locally caching the first checkpoint file includes: writing the first checkpoint file into a local memory; or writing the first checkpoint file into a local nonvolatile memory.

Optionally, the persisting the first checkpoint file includes: when the locally caching the first checkpoint file is writing the first checkpoint into a local memory, writing the first checkpoint file into a local nonvolatile memory for persistence; or storing the first checkpoint file in a remote storage system, where the storing the first checkpoint file in a remote storage system includes: directly sending the first checkpoint file to the remote storage system for storage; or sending the first checkpoint file to the remote storage system for storage through forwarding by at least one other checkpoint file processing module.

Optionally, the method further includes: determining an estimated time for directly sending the first checkpoint file and an estimated time for sending the first checkpoint file through forwarding; and selecting a sending method with a shorter estimated time to send the first checkpoint file to the remote storage system.

Optionally, the method further includes: backing up the first checkpoint file to another checkpoint file processing module.

Optionally, the method further includes: when a write request of the model training module for a second checkpoint file is received, if it is determined that the storage operation on the first checkpoint file fails to be performed, retrying the storage operation on the first checkpoint file until the execution succeeds; and feeding back a message indicating that the storage operation on the first checkpoint file is successfully performed to the model training module, to indicate the model training module to roll back the training task based on the first checkpoint file.

Optionally, each checkpoint file processing module included in the system is deployed on an all-flash cache node.

As described above, the embodiment shown in FIG. 5 is used to describe the technical solutions of this specification from the perspective of the checkpoint file processing module. However, related content is actually described above in detail with reference to the embodiments shown in FIG. 1 to FIG. 3. Therefore, for understanding, references can be made to the above-mentioned descriptions. Details are omitted here for simplicity.

FIG. 6 is a schematic structural diagram illustrating a device, according to some example embodiments. Referring to FIG. 6, in terms of hardware, the device includes a processor 602, an internal bus 604, a network interface 606, a memory 608, and a nonvolatile memory 610, and certainly may further include hardware needed for another function. One or more embodiments of this specification can be implemented in a software-based way. For example, the processor 602 reads a corresponding computer program from the nonvolatile memory 610 into the memory 608, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can be hardware or a logic device.

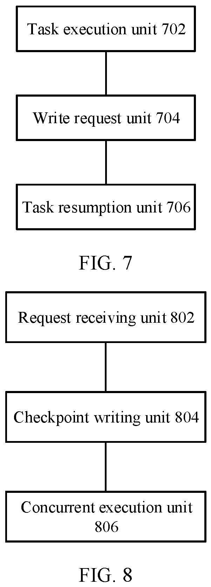

Referring to FIG. 7, a model training and checkpoint file storage apparatus can be applied to the device shown in FIG. 6, to implement the technical solutions of this specification. The apparatus is applied to a model training module in a system. The system further includes a checkpoint file processing module. The apparatus can include: a task execution unit 702, configured to execute a training task of an artificial intelligence model, where computation in the training task is performed by GPU chips; a write request unit 704, configured to: during the execution of the training task, if a first checkpoint file is generated, suspend the training task, and make a request to the checkpoint file processing module to write the first checkpoint file; and a task resumption unit 706, configured to resume the training task when receiving a write success notification returned by the checkpoint file processing module for the first checkpoint file, where the checkpoint file processing module locally caches the first checkpoint file based on a received write request for the first checkpoint file, and then concurrently performs a notification operation and a storage operation, where the notification operation is used to return the write success notification for the first checkpoint file to the model training module, and the storage operation is used to persist the first checkpoint file.

Optionally, the apparatus further includes: a task rollback unit, configured to: after a request is made to the checkpoint file processing module to write a second checkpoint file, if it is determined that the checkpoint file processing module fails to perform the storage operation on the first checkpoint file and the retried storage operation on the first checkpoint file is successfully performed, roll back the training task based on the first checkpoint file.

Referring to FIG. 8, a model training and checkpoint file storage apparatus can be applied to the device shown in FIG. 6, to implement the technical solutions of this specification. The apparatus is applied to a checkpoint file processing module in a system. The system further includes a model training module. The apparatus can include: a request receiving unit 802, configured to receive a write request of the model training module for a first checkpoint file, where the first checkpoint file is generated when the model training module executes a training task of an artificial intelligence model, computation in the training task is performed by GPU chips, and the training task is suspended after the first checkpoint file is generated; a checkpoint writing unit 804, configured to locally cache the first checkpoint file; and a concurrent execution unit 806, configured to concurrently perform a notification operation and a storage operation, where the notification operation is used to return a write success notification for the first checkpoint file to the model training module, to indicate the model training module to resume the training task, and the storage operation is used to persist the first checkpoint file.

Optionally, the checkpoint writing unit 804 is specifically configured to: write the first checkpoint file into a local memory; or write the first checkpoint file into a local nonvolatile memory.

Optionally, the storage operation includes: when the locally caching the first checkpoint file is writing the first checkpoint into a local memory, writing the first checkpoint file into a local nonvolatile memory for persistence; or storing the first checkpoint file in a remote storage system, where the storing the first checkpoint file in a remote storage system includes: directly sending the first checkpoint file to the remote storage system for storage; or sending the first checkpoint file to the remote storage system for storage through forwarding by at least one other checkpoint file processing module.

Optionally, the apparatus further includes: an estimated time determining unit, configured to determine an estimated time for directly sending the first checkpoint file and an estimated time for sending the first checkpoint file through forwarding; and a sending method selection unit, configured to select a sending method with a shorter estimated time to send the first checkpoint file to the remote storage system.

Optionally, the apparatus further includes: a checkpoint backup unit, configured to back up the first checkpoint file to another checkpoint file processing module.

Optionally, an operation retry unit, configured to: when a write request of the model training module for a second checkpoint file is received, if it is determined that the storage operation on the first checkpoint file fails to be performed, retry the storage operation on the first checkpoint file until the execution succeeds; and a message feedback unit, configured to feed back a message indicating that the storage operation on the first checkpoint file is successfully performed to the model training module, to indicate the model training module to roll back the training task based on the first checkpoint file.

Based on the same concept as the above-mentioned method, this specification further provides an electronic device, including: a processor; and a storage, configured to store instructions executable by the processor. The processor runs the executable instructions to implement the steps of the method in any one of the above-mentioned embodiments.

Based on the same concept as the above-mentioned method, this specification further provides a computer-readable storage medium. The computer-readable storage medium stores computer instructions, and when the instructions are executed by a processor, the steps of the method in any one of the above-mentioned embodiments are implemented.

Based on the same concept as the above-mentioned method, this specification further provides a computer program product, including a computer program/instructions. When the computer program/instructions is/are executed by a processor, the steps of the method in any one of the above-mentioned embodiments are implemented.

### EXAMPLES

1. A model training and checkpoint file storage system, comprising a model training module and a checkpoint file processing module, wherein
   the model training module is configured to execute a training task of an artificial intelligence model, wherein computation in the training task is performed by GPU chips; and during execution of the training task, if a first checkpoint file is generated, the training task is suspended, and a request is made to the checkpoint file processing module to write the first checkpoint file; and
   the checkpoint file processing module is configured to locally cache the first checkpoint file based on a received write request for the first checkpoint file, and then concurrently perform a notification operation and a storage operation, wherein the notification operation is used to return a write success notification for the first checkpoint file to the model training module, to indicate the model training module to resume the training task, and the storage operation is used to persist the first checkpoint file.
2. The system according to example 1, wherein the locally caching the first checkpoint file comprises:
   writing the first checkpoint file into a local memory; or
   writing the first checkpoint file into a local nonvolatile memory.
3. The system according to example 1, wherein
   the persisting the first checkpoint file comprises: when the locally caching the first checkpoint file is writing the first checkpoint into a local memory, writing the first checkpoint file into a local nonvolatile memory for persistence; or storing the first checkpoint file in a remote storage system, wherein
   the storing the first checkpoint file in a remote storage system comprises: directly sending the first checkpoint file to the remote storage system for storage; or sending the first checkpoint file to the remote storage system for storage through forwarding by at least one other checkpoint file processing module.
4. The system according to example 3, wherein the checkpoint file processing module is further configured to:
   determine an estimated time for directly sending the first checkpoint file and an estimated time for sending the first checkpoint file through forwarding; and
   select a sending method with a shorter estimated time to send the first checkpoint file to the remote storage system.
5. The system according to example 1, wherein the checkpoint file processing module is further configured to:
   back up the first checkpoint file to another checkpoint file processing module.
6. The system according to example 1, wherein
   the checkpoint file processing module is further configured to: when a write request of the model training module for a second checkpoint file is received, if it is determined that the storage operation on the first checkpoint file fails to be performed, retry the storage operation on the first checkpoint file until the execution succeeds; and
   the model training module is further configured to roll back the training task based on the first checkpoint file after it is determined that the storage operation on the first checkpoint file is successfully performed.
7. The system according to example 1, wherein each checkpoint file processing module comprised in the system is deployed on an all-flash cache node.
8. A model training and checkpoint file storage method, applied to a model training module in a system, wherein the system further comprises a checkpoint file processing module, and the method comprises:
   executing a training task of an artificial intelligence model, wherein computation in the training task is performed by GPU chips;
   during execution of the training task, if a first checkpoint file is generated, suspending the training task, and making a request to the checkpoint file processing module to write the first checkpoint file; and
   resuming the training task when receiving a write success notification returned by the checkpoint file processing module for the first checkpoint file, wherein the checkpoint file processing module locally caches the first checkpoint file based on a received write request for the first checkpoint file, and then concurrently performs a notification operation and a storage operation, wherein the notification operation is used to return the write success notification for the first checkpoint file to the model training module, and the storage operation is used to persist the first checkpoint file.
9. The method according to example 8, further comprising:
   after a request is made to the checkpoint file processing module to write a second checkpoint file, if it is determined that the checkpoint file processing module fails to perform the storage operation on the first checkpoint file and the retried storage operation on the first checkpoint file is successfully performed, rolling back the training task based on the first checkpoint file.
10. A model training and checkpoint file storage method, applied to a checkpoint file processing module in a system, wherein the system further comprises a model training module, and the method comprises:
   receiving a write request of the model training module for a first checkpoint file, wherein the first checkpoint file is generated when the model training module executes a training task of an artificial intelligence model, computation in the training task is performed by GPU chips, and the training task is suspended after the first checkpoint file is generated;
   locally caching the first checkpoint file; and
   concurrently performing a notification operation and a storage operation, wherein the notification operation is used to return a write success notification for the first checkpoint file to the model training module, to indicate the model training module to resume the training task, and the storage operation is used to persist the first checkpoint file.
11. The method according to example 10, wherein the locally caching the first checkpoint file comprises:
   writing the first checkpoint file into a local memory; or
   writing the first checkpoint file into a local nonvolatile memory.
12. The method according to example 10, wherein
   the persisting the first checkpoint file comprises: when the locally caching the first checkpoint file is writing the first checkpoint into a local memory, writing the first checkpoint file into a local nonvolatile memory for persistence; or storing the first checkpoint file in a remote storage system, wherein
   the storing the first checkpoint file in a remote storage system comprises: directly sending the first checkpoint file to the remote storage system for storage; or sending the first checkpoint file to the remote storage system for storage through forwarding by at least one other checkpoint file processing module.
13. The method according to example 12, wherein the method further comprises:
   determining an estimated time for directly sending the first checkpoint file and an estimated time for sending the first checkpoint file through forwarding; and
   selecting a sending method with a shorter estimated time to send the first checkpoint file to the remote storage system.
14. The method according to example 10, wherein the method further comprises:
   backing up the first checkpoint file to another checkpoint file processing module.
15. The method according to example 10, further comprising:
   when a write request of the model training module for a second checkpoint file is received, if it is determined that the storage operation on the first checkpoint file fails to be performed, retrying the storage operation on the first checkpoint file until the execution succeeds; and
   feeding back a message indicating that the storage operation on the first checkpoint file is successfully performed to the model training module, to indicate the model training module to roll back the training task based on the first checkpoint file.
16. An electronic device, comprising: a processor; and a storage, configured to store instructions executable by the processor, wherein the processor runs the executable instructions to implement the steps of the method according to any one of examples 8 to 15.
17. A computer-readable storage medium, wherein the computer-readable storage medium stores computer instructions, and when the instructions are executed by a processor, the steps of the method according to any one of examples 8 to 15 are implemented.
18. A computer program product, comprising a computer program/instructions, wherein when the computer program/instructions is/are executed by a processor, the steps of the method according to any one of examples 8 to 15 are implemented.

## Claims

1. A model training and checkpoint file storage system, comprising a model training module and a checkpoint file processing module, wherein
the model training module is configured to execute (402) a training task of an artificial intelligence model, wherein computation in the training task is performed by GPU chips; and during execution of the training task, if a first checkpoint file is generated, the training task is suspended (404), and a request is made (404) to the checkpoint file processing module to write the first checkpoint file; and
the checkpoint file processing module is configured to locally cache (406) the first checkpoint file based on a received write request for the first checkpoint file, and then concurrently perform a notification operation and a storage operation, wherein the notification operation is used to return a write success notification for the first checkpoint file to the model training module, to indicate the model training module to resume the training task, and the storage operation is used to persist the first checkpoint file.

2. The system according to claim 1, wherein the locally caching (406) the first checkpoint file comprises:
writing the first checkpoint file into a local memory; or
writing the first checkpoint file into a local nonvolatile memory.

3. The system according to any one of claims 1 or 2, wherein
the persisting the first checkpoint file comprises: when the locally caching the first checkpoint file is writing the first checkpoint into a local memory, writing the first checkpoint file into a local nonvolatile memory for persistence; or storing the first checkpoint file in a remote storage system, wherein
the storing the first checkpoint file in a remote storage system comprises: directly sending the first checkpoint file to the remote storage system for storage; or sending the first checkpoint file to the remote storage system for storage through forwarding by at least one other checkpoint file processing module; optionally
wherein the checkpoint file processing module is further configured to:
determine an estimated time for directly sending the first checkpoint file and an estimated time for sending the first checkpoint file through forwarding; and
select a sending method with a shorter estimated time to send the first checkpoint file to the remote storage system.

4. The system according to any one of claims 1 to 3, wherein
the checkpoint file processing module is further configured to back up the first checkpoint file to another checkpoint file processing module; and/or wherein
each checkpoint file processing module comprised in the system is deployed on an all-flash cache node.

5. The system according to any one of claims 1 to 4, wherein
the checkpoint file processing module is further configured to, when a write request of the model training module for a second checkpoint file is received, if it is determined that the storage operation on the first checkpoint file fails to be performed, retry the storage operation on the first checkpoint file until the execution succeeds; and
the model training module is further configured to roll back the training task based on the first checkpoint file after it is determined that the storage operation on the first checkpoint file is successfully performed.

6. A model training and checkpoint file storage method performed by a model training module (31) in a system, wherein the system further comprises a checkpoint file processing module (32), and the method comprises:
executing (402) a training task of an artificial intelligence model, wherein computation in the training task is performed by GPU chips;
during execution of the training task, if a first checkpoint file is generated, suspending (404) the training task, and making a request to the checkpoint file processing module to write the first checkpoint file; and
resuming the training task when receiving a write success notification returned by the checkpoint file processing module for the first checkpoint file, wherein the checkpoint file processing module locally caches (406) the first checkpoint file based on a received write request for the first checkpoint file, and then concurrently performs a notification operation and a storage operation, wherein the notification operation is used to return the write success notification for the first checkpoint file to the model training module, and the storage operation is used to persist the first checkpoint file; optionally,
wherein the method further comprises:
after a request is made to the checkpoint file processing module to write a second checkpoint file, if it is determined that the checkpoint file processing module fails to perform the storage operation on the first checkpoint file and the retried storage operation on the first checkpoint file is successfully performed, rolling back the training task based on the first checkpoint file.

7. A model training and checkpoint file storage method performed by a checkpoint file processing module (32) in a system, wherein the system further comprises a model training module (31), and the method comprises:
receiving (301) a write request of the model training module for a first checkpoint file, wherein the first checkpoint file is generated when the model training module executes a training task of an artificial intelligence model, computation in the training task is performed by GPU chips, and the training task is suspended after the first checkpoint file is generated;
locally caching the first checkpoint file; and
concurrently performing a notification operation and a storage operation, wherein the notification operation is used to return (304a) a write success notification for the first checkpoint file to the model training module, to indicate the model training module to resume the training task, and the storage operation is used to persist (304b) the first checkpoint file.

8. The method according to claim 7, wherein the locally caching (406) the first checkpoint file comprises:
writing the first checkpoint file into a local memory; or
writing the first checkpoint file into a local nonvolatile memory.

9. The method according to any one of claims 7 or 8, wherein
the persisting the first checkpoint file comprises, when the locally caching the first checkpoint file is writing the first checkpoint into a local memory, writing the first checkpoint file into a local nonvolatile memory for persistence; or storing the first checkpoint file in a remote storage system, wherein
the storing the first checkpoint file in a remote storage system comprises: directly sending the first checkpoint file to the remote storage system for storage; or sending the first checkpoint file to the remote storage system for storage through forwarding by at least one other checkpoint file processing module.

10. The method according to claim 9, wherein the method further comprises:
determining an estimated time for directly sending the first checkpoint file and an estimated time for sending the first checkpoint file through forwarding; and
selecting a sending method with a shorter estimated time to send the first checkpoint file to the remote storage system.

11. The method according to any one of claims 7 to 10, wherein the method further comprises:
backing up the first checkpoint file to another checkpoint file processing module.

12. The method according to any one of claims 7 to 11, further comprising:
when a write request of the model training module for a second checkpoint file is received, if it is determined that the storage operation on the first checkpoint file fails to be performed, retrying the storage operation on the first checkpoint file until the execution succeeds; and
feeding back a message indicating that the storage operation on the first checkpoint file is successfully performed to the model training module, to indicate the model training module to roll back the training task based on the first checkpoint file.

13. An electronic device, comprising: a processor; and a storage, configured to store instructions executable by the processor, wherein the processor runs the executable instructions to implement the steps of the method according to any one of claims 6 to 12.

14. A computer-readable storage medium, wherein the computer-readable storage medium stores computer instructions, and wherein, when the instructions are executed by a processor, the steps of the method according to any one of claims 6 to 12 are implemented.

15. A computer program product, comprising a computer program/instructions, wherein, when the computer program/instructions is/are executed by a processor, the steps of the method according to any one of claims 6 to 12 are implemented.
